(19) Europäisches Patentamt
European Patent Office
Office européen des brevets

(11) Publication number: **0 179 500 B1**

(12) **EUROPEAN PATENT SPECIFICATION**

(45) Date of publication of patent specification: **25.04.90**

(21) Application number: **85201088.3**

(22) Date of filing: **01.06.83**

(60) Publication number of the earlier application in accordance with Art. 76 EPC: **0 096 999**

(51) Int. Cl.[5]: **A 01 N 57/28,** C 07 F 9/24, C 07 F 9/44

(54) **N'-(methoxy(methylthio)phosphinyl)-N,N-dimethyl carbamidothioic acid, ethyl ester.**

(30) Priority: **04.06.82 US 385157**

(43) Date of publication of application: **30.04.86 Bulletin 86/18**

(45) Publication of the grant of the patent: **25.04.90 Bulletin 90/17**

(84) Designated Contracting States: **AT BE CH DE FR IT LI LU NL SE**

(56) References cited:
**US-A-3 825 632**
**US-A-4 153 604**

**CHEMICAL ABSTRACTS, vol. 95, no. 15, October 12, 1981, page 633, abstract no. 132447x, Columbus, Ohio, US; L. KURUC et al.: "Phosphorylated isothioureas. V. Preparation and properties of 3-phosphrylated and 3-thiophosphorylated 1,1,2-trisubstituted isothioureas"**

**CHEMICAL ABSTRACTS, vol. 90, no. 7, February 12, 1979, page 570, abstract no. 54501r, Columbus, Ohio, US Idem**

**The file contains technical information submitted after the application was filed and not included in this specification**

(73) Proprietor: **THE DOW CHEMICAL COMPANY
2030 Dow Center Abbott Road P.O. Box 1967
Midland Michigan 48640-1967 (US)**

(72) Inventor: **Reifschneider, Walter
3538 Bayberry Drive
Walnut Creek California (US)**
Inventor: **Paroonagian, Doris Lucy
1731 Shirley Drive
Pleasant Hill California (US)**

(74) Representative: **Allard, Susan Joyce et al
BOULT, WADE & TENNANT, 27 Furnival Street
London EC4A 1PQ (GB)**

(56) References cited:
**JOURNAL OF GENERAL CHEMISTRY, vol. 48, no. 8, August 1978, pages 1579-1583, Plenum Publishing Corp., New York, US; L. YA. BOGEL'FER et al.: "Phosphorylated amidine systems. Synthesis and study of the steroisomerism of phosphorylated isothioureas by means of PMR spectroscopy"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 179 500 B1

**Description**

Various phosphorus derivatives of carbamimidothioic acid esters having pesticidal activity are known such as those taught in Czechoslovakian Patent No. 172,676.

Chemical Abstracts, Vol. 95, 1981, 132447x discloses various phosphorus derivatives of carbamimidothioic acid esters. The compounds synthesized do not show as high an insecticidal, acaricidal or ovicidal activity as the standard Malathion, Fenitrothion and Carbofenthion insecticides.

SU—707232 discloses phosphorylated derivatives of trimethylisothiourea of the formula

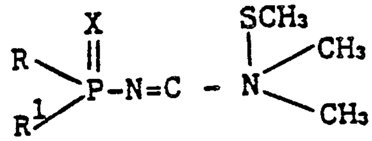

in which R is methyl, ethyl, $CH_2Cl$ or ethoxy, and R′ is ethoxy, phenoxy, chlorophenoxy, 2,4-dichlorophenoxy, 2,4,5-trichlorophenoxy or pentachlorophenoxy. These compounds are stated to be useful as acaricides and insecticides.

The present invention is directed to the compound N′-(methoxy(methylthio)phosphinyl)-N,N-dimethyl carbamimidothioic acid, ethyl ester, which corresponds to the formula

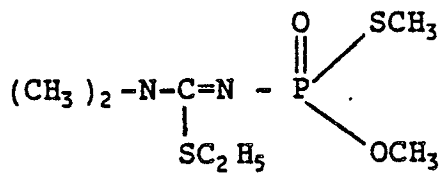

This compound is of use for the kill and control of sucking and boring-type insects which attack a variety of plants such as rice, cotton, corn, vegetables and fruit and nut trees. Our copending patent application No. 83303161.0 describes and claims the use of this compound and other structurally related compounds for the kill and control of sucking and boring-type insects.

The active compound of the present invention is an oil and is soluble in many common organic solvents.

In addition, the active compound of the present invention has been found to be highly effective as a plant systemic insecticide.

The compound of the present invention can be prepared by a variety of *per se* known methods, for example as exemplified in the Patent Application EP—A—96999 for compounds of the formula A:

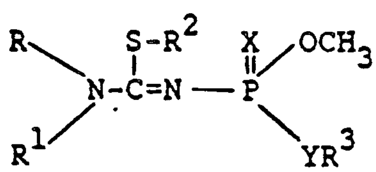

*A*

wherein

R and $R^1$ are inter alia each independently a methyl or ethyl group,

$R^2$ and $R^3$ are each independently an alkyl group containing 1 to 4 carbon atoms, and

X and Y represent oxygen or sulfur, with the proviso that X and Y are not the same.

Method A:

Compounds of the above formula A wherein X is oxygen and Y is sulfur can be prepared by the rearrangement of the corresponding thiono compounds with the aid of an alkyl iodide or bromide.

The reaction scheme is as follows:

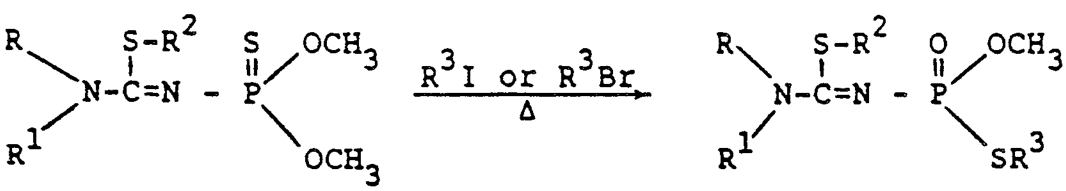

wherein R, $R^1$, $R^2$ and $R^3$ are as hereinbefore defined (the $R^3$ in the $R^3I$ or $R^3Br$ is the same as the $R^3$ in "$SR^3$").

In carrying out this reaction, one mole of an appropriate N'-dimethoxyphosphinothioyl-N,N-substituted carbamimidothioic acid ester is mixed with from 1 to 3 moles of the appropriate alkyl iodide or bromide and the mixture heated under reflux for from 1 to 6 hours until the reaction is complete. The excess alkyl iodide or bromide is removed by distillation and the product purified by treatment with a solvent such as hexane or further distillation.

Method B:

The compounds of the above formula A wherein X is oxygen and Y is sulfur can also be prepared by thermal rearrangement of the corresponding thiono compounds:

The reaction scheme is as follows:

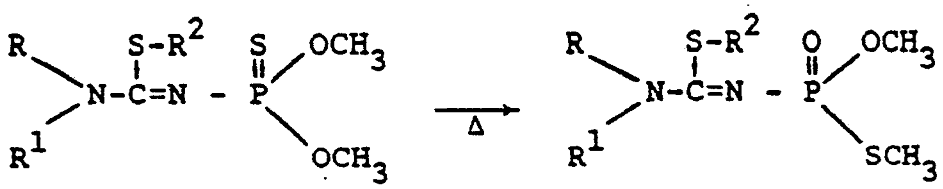


In carrying out this reaction, the appropriate N'-(alkoxy(methoxy)phosphinothioyl)-N,N-substituted carbamimidothioic acid ester is distilled at a temperature of from 110° to 190°C and a reduced pressure of from 0.5 to 1.5 millimeters of mercury.

Method C:

Substantially equimolar amounts of an appropriate substituted carbamimidothioic acid ester of the formulae

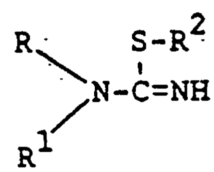

and an appropriate phosphorochloridothioic acid ester of the formulae

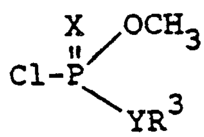

wherein X, Y, R, $R^1$, $R^2$ and $R^3$ are as hereinbefore defined are reacted together in the presence of a solvent and a HCl acceptor.

In carrying out the reaction, the substituted carbamimidothioic acid ester and the phosphorus chloride reactants, the solvent and the HCl acceptor are mixed together in any convenient manner. The mixture is then stirred at a temperature between 15°C and gentle reflux until all of the phosphorus reactant is consumed.

Representative solvents include, for example, acetonitrile, methylene chloride, cyclohexane, benzene, toluene, xylene, acetone, methyl ethyl ketone, diethyl ether, dioxane and tetrahydrofuran.

Representative hydrogen chloride acceptors (acid binding agents) include for example, alkali metal carbonates such as sodium and potassium carbonate and tertiary amines such as, for example, triethylamine and pyridine.

At the completion of the reaction, the reaction mixture is filtered to remove any insolubles and the filtrate concentrated under reduced pressure. The residue is then taken up in diethyl ether, benzene, toluene, methylene chloride or chloroform and washed thoroughly with water and then with a saturated sodium chloride solution and dried. The solvent is removed by evaporation under reduced pressure leaving the desired product.

The compound of the present invention is very effective for the control of the many sucking and boring-type insects found on the roots or aerial portions of growing plants.

Representative of the various sucking or boring-type insects which attack plants and which are killed and controlled by the active compound employed in the present invention are members of the orders Homoptera, Thysanoptera, Hemiptera, Coleoptera, and Acarina. More specifically, kill and control is obtained for insects such as aphids (*Aphididae*) such as the green peach aphid (*Myzus persicae*), the bean

aphid (*Aphis fabae*), the black cherry aphid (*Myzus ceraci*), the pea aphid (*Acythorsiphum pisum*) and the potato aphid (*Macrosiphum euphorbiae*), the currant gall aphid (*Cryptomyzus ribis*), the mealy apple aphid (*Sappaphis mali*), the mealy plum aphid (*Hyalopterus pruni*), the cotton aphid (*Aphis gossypii*); the whiteflies (*Aleyrodidae*) including the banded wing whitefly (*Trialeurodes abutilonea*), grape whitefly (*Trialeurodes vittata*), greenhouse whitefly (*Trialeurodes vaporarium*) and sweet potato whitefly (*Bemisia tabacii*); scales such as the San Jose scale (*Aspidiotus perniciosus*), oyster scale (*Lepidosaphes ulnii*), the California red scale (*Aonidiella aurantii*), black scale (*Saissetia olea*) Terapin scale (*Lecanium* sp) and the oleander scale (*Aspidiotus hederae*); mealybugs (coccidae) such as the grape mealybug (*Pseudococcus maritimus*), greenhouse mealybug (*Pseudococcus* sp) and citrus mealybug (*Planococcus* sp); thrips (*Thysanoptera*) such as (*Hercinothrips femoralis*), gladiolus thrips (*Taeniothrips* sp), onion thrips (*Thrips tabacii*), greenhouse thrips (*Heliothrips* sp), flower thrips (*Frankliniella* sp) and rice thrips (*Chloethrips oryzae*); bugs, for example the beet bug (*Piesma quadrata*), squash bug (*Anasa* sp), harlequin bugs (*Murgantia histriconica*), (*Trigonotylus* sp), Corbett ricebug (*Leptocorixa corbetti*), slender ricebug (*Cletus trigonus*), black ricebug (*Scotinophora lurida*), Plant bugs (*Lygus* sp), fleahoppers (*Halticus* sp), cotton fleahoppers (*Psallus* sp), the cotton bug (*Dysdercus intermedius*) and stinkbugs such as the southern green stinkbug (*Nezara viridulla*); leafhoppers and planthoppers, such as aster leafhopper (*Macrosteles fascifrons*), rice green leafhopper (*Nephotettix virescens*), zig zag leafhopper (*Recilia dorsalis*), (*Nephotettix apicalis*), white back planthopper (*Sogattella furcifera*), brown planthopper (*Nilaparvata lugens*), smaller brown planthopper (*Laodelphax striatellus*), grape leafhopper (*Erythroneura* sp), potato leafhopper (*Empoasca fabae*), apple sucker (*Psylla mali*), pear psylla (*Psylla pyricola*), potato psillid (*Paratrioza cockerlelli*) and the like as well as rice water weevil (*Lissorhoptrus oryzophilus*); the mites (*Acarina*) in particular, the spider mites (*Tetranychidae*) such as the two-spotted spider mite (*Tetranychus urticae*), carmine spider mite (*Tetranychus cinnabarinus*) and the European red mite (*Panonychus ulmi*), blister mites, for example the currant blister mite (*Eriophyes ribis*) and tarsonemids, for example the broad mite (*Hemitarsonemus latus*), the cyclamen mite (*Tarsonemus pallidus*); borers such as the rice stemborer (*Chilo sp*), pink borer (*Sesamia sp*) and the paddy borer (*Tryporyza sp*); and the like.

The use of the compound of the present invention for the kill and control of sucking and boring-type insects is described in our co-pending patent application No. 83303161.0, which claims a method for the kill and control of sucking and boring-type insects which attack plants which comprises contacting the insects or their habitat with a composition which comprises an inert carrier in intimate admixture with an insecticidally effective amount of at least one active compound of the formula

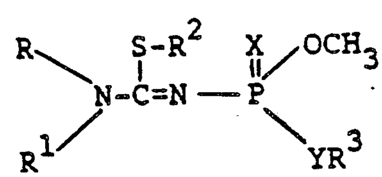

*A*

wherein

R and $R^1$ are each independently a methyl or ethyl group or

R and $R^1$ when taken together represent an alkylene group containing 4 to 6 carbon atoms or a group of the formula

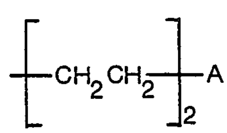

wherein

A is oxygen, sulfur or

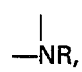

wherein R is as defined above;

$R^2$ and $R^3$ are each independently an alkyl group containing 1 to 4 carbon atoms and

X and Y represent oxygen or sulfur, with the proviso that X and Y are not the same.

The compound of the present invention can be prepared according to the preparative procedures outlined in the Examples of our co-pending patent application No. 83303161.0 and employing the appropriate starting materials. The compound of the invention had a refractive index

$$n_d^{25} = 1.5601.$$

**Claims for the Contracting States: BE FR DE NL IT LU SE CH-LI**

1. A compound of the formula

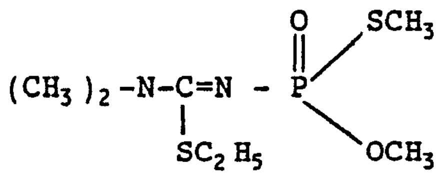

2. A process for the preparation of a compound as claimed in claim 1 by *per se* known means.

3. An insecticidal composition comprising an insecticidally effective amount of the active compound of the formula

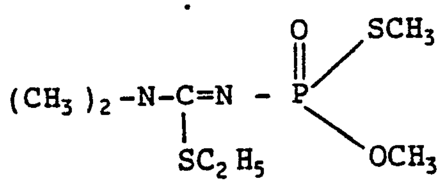

together with an inert diluent or carrier.

4. A composition as claimed in claim 3 for use as an acaricide.

**Claims for the Contracting State: AT**

1. A process for the preparation of a compound of the formula

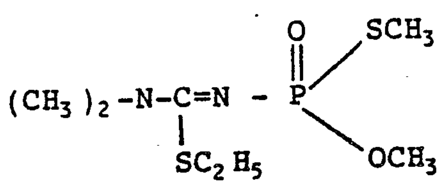

by *per se* known methods.

2. An insecticidal composition comprising an insecticidally effective amount of the compound as defined in claim 1 together with an inert diluent or carrier.

3. A composition as claimed in claim 2 for use as an acaricide.

**Patentansprüche für die Vertragsstaaten: BE FR DE NL IT LU SE CH-LI**

1. Verbindung der Formel

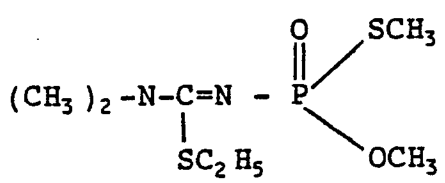

2. Verfahren zur Herstellung einer Verbindung nach Anspruch 1 mit per se bekannten Mitteln.

3. Insektizide Zusammensetzung, enthaltend eine insektizid wirksame Menge der aktiven Verbindung der Formel

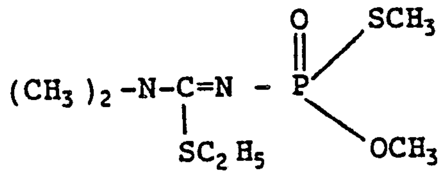

zusammen mit einem inerten Verdünnungs- oder Trägerstoff.

4. Zusammensetzung nach Anspruch 3 zur Verwendung als Akarizid.

**Patentansprüche für den Vertragsstaat: AT**

1. Verfahren zur Herstellung einer Verbindung der Formel

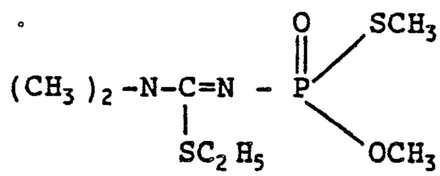

mit per se bekannten Mitteln.

2. Insektizide Zusammensetzung, enthaltend eine insektizid wirksame Menge der Verbindung nach Anspruch 1 zusammen mit einem inerten Verdünnungs- oder Trägerstoff.

3. Zusammensetzung nach Anspruch 2 zur Verwendung als Akarizid.

**Revendications pour les E'tats contractants: BE FR DE NL IT LU SE CH-LI**

1. Un composé de formule

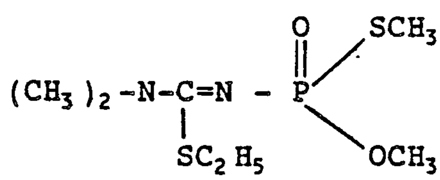

2. Un procédé pour préparer un composé tel que revendiqué dans la revendication 1 avec des moyens connus par eux-mêmes.

3. Une composition insecticide comprenant une quantité, efficace pour la lutte contre les insectes, du composé actif de formule

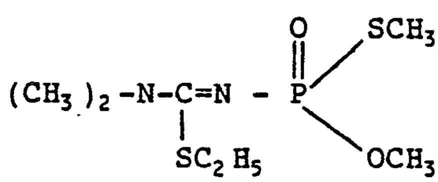

conjointement avec un diluant ou véhicule inerte.

4. Une composition telle que revendiquée dans la revendication 3, à utiliser en tant qu'acaricide.

**Revendications pour l'Etat contractant: AT**

1. Un procédé pour préparer un composé de formule

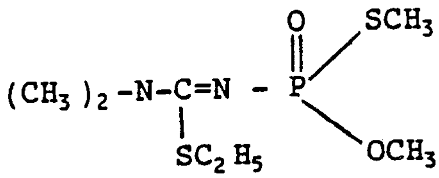

avec des méthodes connues par elles-mêmes.

2. Une composition insecticide comprenant une quantité, efficace pour la lutte contre les insectes, du composé tel que défini dans la revendication 1, conjointement avec un diluant ou véhicule inerte.

3. Une composition telle que revendiquée dans la revendication 2, à utiliser en tant qu'acaricide.